# EUROPÄISCHE PATENTSCHRIFT

(11) **EP 2 601 817 B1**
(45) Veröffentlichungstag und Bekanntmachung des Hinweises auf die Patenterteilung: **08.04.2020**
(21) Anmeldenummer: 11741446.6
(22) Anmeldetag: 03.08.2011
(51) Int. Cl.: H05B 33/08

(54) **VERFAHREN UND BETRIEBSSCHALTUNG ZUM BETREIBEN EINER LED**
METHOD AND OPERATING CIRCUIT FOR OPERATION OF AN LED
PROCÉDÉ ET CIRCUIT DE FONCTIONNEMENT POUR FAIRE FONCTIONNER UNE DIODE ÉLECTROLUMINESCENTE (LED)

(30) Priorität: 03.08.2010 DE 102010038849
(43) Veröffentlichungstag der Anmeldung: 12.06.2013
(73) Patentinhaber: Tridonic GmbH & Co. KG, 6851 Dornbirn (AT)
(72) Erfinder: COMBET, Dominique, CH-8750 Glarus (CH)
(74) Vertreter: Rupp, Christian
(86) Internationale Anmeldenummer: PCT/EP2011/063348
(87) Internationale Veröffentlichungsnummer: WO 2012/016996

(56) Entgegenhaltungen:
- US-A1- 2008 042 590
- US-A1- 2008 067 988
- US-B1- 6 388 393
- US-B1- 7 145 295

## Beschreibung

Die vorliegende Erfindung bezieht sich auf Verfahren zum Betreiben einer LED mit modulierten Impulsen ("PM-Impulsen"), die durch getaktetes Laden und Entladen eines Energiespeichers erzeugt werden.

Ein derartiges bekanntes Verfahren wird üblicherweise realisiert durch eine Betriebsschaltung für eine LED-Strecke,
mit einem Energiespeicher,
mit einem ersten Schalter, über den der Energiespeicher und die LED-Strecke an eine Speisespannung anschließbar sind, wobei sich der Energiespeicher bei geöffnetem Schalter über die LED-Strecke entlädt,
und mit einem Steuerschaltungsteil zum Takten des ersten Schalters. Zur Energiespeicherung kann beispielsweise eine Induktivität verwendet werden. Insgesamt ergibt sich somit ein zyklisch ansteigender und abfallender Stromverlauf durch die LED-Strecke.

Eine LED-Strecke kann eine oder mehrere, seriell und/oder parallel verschaltete LEDs und/oder OLEDs aufweisen.

Auf diesem Gebiet ist aus US 7 145 295 B1 eine Dimmersteuerschaltung für Leuchtdioden bekannt, die ein Abblendsteuersignal zur Bestimmung der Helligkeit von mindestens einer Leuchtdiode erzeugt.

Zum Dimmen der LED werden der Betriebsschaltung Dimmbefehle zugeführt. Diese Dimmbefehle können bspw. als pulsmoduliertes Signal oder auch in komplett digitaler Form geliefert werden, die in PM-Impulse umgesetzt werden. Bei der Erfindung liegt stets ein PM-Betrieb vor. Während der Einschaltzeitdauer eines PM-Impulses liegt der genannte näherungsweise dreieckförmige Stromverlauf durch die LED-Strecke vor.

Unter PM-Impuls ist dabei ein pulsmodulierter Impuls und unter PM-Betrieb ist dabei ein pulsmodulierter Betrieb zu verstehen, wobei die Frequenz, die Einschaltzeit, das Einschaltverhältnis und/oder die Ausschaltzeitdauer der Pulse veränderlich sein können. Beispielsweise kann sich dabei um eine PWM (Pulsweitenmodulation), PFM (Pulsfrequenzmodulation) oder PCM (Pulscodemodulation) handeln.

Das Tastverhältnis der PM-Impulse kann nur in diskreten Stufen verändert werden, wobei die Schrittweite bspw. von der Taktrate ("Clock") der Steuerschaltung abhängt, die Rückführsignale erhält und den genannten Schalter taktet. Die Taktrate der Steuerschaltung kann so gewählt werden, dass Änderungen des Dimmpegels auch bei geringer Lichtleistung nicht vom menschlichen Auge als diskrete Sprünge wahrgenommen werden.

Eine weitere Einschränkung sind die Zeitkonstanten der Schaltung, also die Zeitkonstanten für das Ansteigen des Stroms bei geschlossenem Schalter und das Abfallen bei geöffnetem Schalter. Geringe Zeitkonstanten sind hinsichtlich der Auflösung von Vorteil, allerdings hat das häufige Schalten Nachteile hinsichtlich der Effizienz bzw. höheren Verluste.

Die Erfindung setzt an diesem Problem an.

Die Lösung ist in den Merkmalen der unabhängigen Ansprüche niedergelegt. Die abhängigen Ansprüche geben den zentralen Gedanken der Erfindung in besonders vorteilhafter Weise weiter.

Der zentrale Gedanke der Erfindung besteht darin, dass die Zeitkonstanten, also die Zeitdauer der steigenden und/oder der fallenden Flanke (die u.a. von dem Wert des steigenden bzw. fallenden Gradienten abhängen), des Stromverlaufs adaptiv, also zustandsabhängig und somit variabel sind. Somit ist also auch die Frequenz der Taktung des Schalters - bei konstantem Dimmpegel - variabel, wobei bei konstantem Dimmpegel zwar die Frequenz der Taktung veränderbar ist, der zeitliche Mittelwert des LED-Stroms aber konstant geregelt bleibt.

Die Adaptivität der Veränderung der Zeitkonstanten kann diskret, also in wenigstens zwei Stufen, oder kontinuierlich erfolgen.

Diese Zustände können bspw. sein:
- Dimmpegel,
- Anstiegsflanke, stationärer (mittlerer) Bereich oder abfallende Flanke eines PM-Impulses, und/oder
- Last, bspw. Spannung über der LED-Strecke.

Der vorstehende Vorschlag geht von der Tatsache aus, dass das menschliche Auge bei einer geringen Grundhelligkeit (geringer Dimmpegel) auf Helligkeitssprünge empfindlicher reagiert, als bei einer hohen Grundhelligkeit (hoher Dimmpegel). Das bedeutet, dass mit dem Lösungsvorschlag beispielsweise die Möglichkeit eröffnet wird, oberhalb und unterhalb eines vorbestimmten Dimmpegels zwei unterschiedliche Taktfrequenzen zu verwenden.

Die praktische Realisierung des Erfindungsvorschlages kann bei der Betriebsschaltung darin bestehen,
dass die Induktivität von wenigstens zwei in Serie geschalteten Teilinduktivitäten gebildet oder mit wenigstens einer Anzapfung versehen ist,
dass ein zweiter Schalter vorgesehen ist, und
dass die eine Teilinduktivität oder ein Induktivitätsabschnitt zwischen der Anzapfung und einem Ende der Induktivität mittels des zweiten Schalters zwecks Erhöhung der Taktfrequenz kurzschließbar ist. Die Zeitkonstante der Schaltung, also die zeitliche Dauer der ansteigenden und abfallenden Phase des Stromverlaufs, wird also durch Veränderung der Induktivität erzielt.

Eine Weiterbildung des Erfindungsvorschlages kann darin bestehen, dass die Taktfrequenz am Anfang und am Ende eines PM-Impulses gegenüber dem mittleren Bereich erhöht wird. Durch diese Maßnahme wird erreicht, dass die vordere und hintere Flanke des Stromverlaufs des PM-Impulses steiler werden, mit dem Ergebnis, dass optische Auflösung des entsprechenden von der LED erzeugten Lichtimpulses verbessert wird.

Zusätzlich oder unabhängig davon kann die Taktfrequenz auch in Abhängigkeit von der LED-Spannung verändert werden.

Das getaktete Laden und Entladen eines Energiespeichers arbeitet nach dem Prinzip eines Zweipunktreglers, wobei der pulsweitenmodulierte Impuls durch einen Dimmimpuls ausgelöst wird, der einen bestimmten Dimmpegel für die LED repräsentiert und der zunächst das Laden des Energiespeichers bis zum Erreichen eines vorbestimmten maximalen Ladezustandes veranlasst,
wobei der Ladevorgang dann abgebrochen und dass Entladen des Energiespeichers bis zu einem minimalen Ladezustand eingeleitet wird,
wobei der Lade- und der Entladevorgang solange wiederholt werden, bis das Ende des Dimmimpulses die endgültige volle Entladung des Energiespeichers veranlasst, und
wobei die Lade- und Entladezeit ("Zeitkonstanten") die Taktfrequenz bestimmen.

Auch eine kontinuierliche Veränderung der Taktfrequenz ist möglich. Diese kann bei der Betriebsschaltung dadurch realisiert werden, dass die Induktivität neben der eigenen Wicklung noch mit einer magnetisch mit letzterer gekoppelten Steuerwicklung versehen ist, über welche die Vormagnetisierung und damit der Induktivitätswert der Induktivität stetig veränderbar ist, wobei die Steuerwicklung von dem Steuerschaltungsteil gesteuert ist.

Eine andere Weiterbildung der erfindungsgemäßen Betriebsschaltung kann darin bestehen, dass dem Steuerschaltungsteil Istwertsignale über den durch den ersten Schalter (S1) fließenden Strom und/oder über die LED-Spannung zugeführt werden, und
dass dem Steuerschaltungsteil ferner Sollwertsignale über den Dimmpegel repräsentierende Dimmimpulse zugeführt werden.

Um das Entladen des Energiespeichers zu ermöglichen, wird für die mit einer Induktivität versehene Betriebsschaltung weiterhin vorgeschlagen, dass die Induktivität und der erste Schalter in Serie geschaltet sind,
dass die Serienschaltung aus den vorstehend genannten Bauelementen parallel zu der Gleichstromsquelle geschaltet sind, und
dass zu der Serienschaltung aus der Induktivität und der LED eine Freilaufdiode parallel geschaltet ist.

Andere Ausgestaltungen und Weiterbildungen der Erfindung sind Gegenstand der Ansprüche, deren Merkmale zur Vermeidung von Wiederholungen hier vollinhaltlich übernommen werden und zum Offenbarungsgehalt der Beschreibung zählen sollen.

Aisführungsbeispiele der Erfindung werden nachfolgend anhand der Zeichnungen beschrieben.

Es zeigen:
**Figur 1** eine erste schematisierte Ausführungsform einer Betriebschaltung zum Betreiben einer LED mit pulsmodulierten Impulsen ("PM-Impulsen"),
**Figur 2** eine zweite schematisierte Ausführungsform für eine solche Betriebsschaltung,
**Figur 3** eine dritte schematisierte Ausführungsform für eine solche Betriebsschaltung,
**Figur 4** den zeitlichen Verlauf von zwei Dimmimpulsen unterschiedlicher Pulsweite sowie die entsprechenden durch die LED fließenden Impulse ohne Veränderung der Taktfrequenz,
**Figur 5** die Folge von zwei durch die LED fließenden Impulsen, oben mit niedriger Taktfrequenz und unten mit höherer Taktfrequenz,
**Figur 6** oben einen durch die LED fließenden Standardimpuls und unten einen modifizierten Standardimpuls, bei dem die Taktfrequenz am Anfang und am Ende gegenüber dem mittleren Bereich erhöht ist.

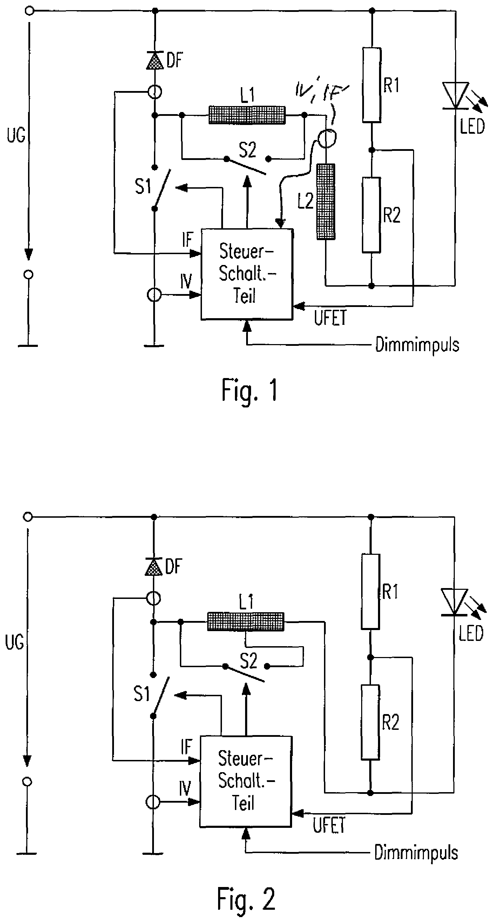

Die in **Figur 1** gezeigte Betriebsschaltung zum Betreiben einer LED wird von einer Spannung UG gespeist. Da deren Realisierung in der Praxis hinlänglich bekannt ist, wird auf eine genaue Beschreibung verzichtet. Normalerweise besteht sie aus einer an das Wechselstromnetz angeschlossenen Gleichrichterschaltung, einer sich daran Glättungsschaltung ggf. mit PFC (beispielsweise ein getakteter AC-DC-Wandler, der eine entsprechende Spannung UG liefert), und schließlich einer Betriebsschaltung, die den notwendigen Gleichstrom mit einem hohen Innenwiderstand zur Verfügung stellt und die eine oder mehreren LED(s)/OLED(s) speist.

In den **Figuren 1 bis 3** ist der Einfachheit halber nur jeweils eine einzige LED dargestellt. Selbstverständlich kann diese auch durch eine Zusammenschaltung von mehreren LEDs und oder OLEDs ersetzt werden.

Nun zurück zu **Figur 1****.** Die Betriebsschaltung weist einen Steuerschaltungsteil auf, der die Schaltzentrale darstellt. Diesem wird ein externer Dimmbefehl zugeführt. Der Dimmbefehl kann bereits aus einer Folge von pulsweitenmodulierten Dimmimpulsen bestehen. Es ist aber auch möglich, dass der Dimmbefehl aus einer Folge von digitalen Signalen besteht, die ihrerseits den Steuerschaltungsteil erst veranlassen, die erwähnten pulsmodulierten Dimmimpulse zu erzeugen.

Somit liegt stets ein PM-Betrieb der LED-Strecke vor.

Das Tastverhältnis der PM-Stromimpulse durch die LED-Strecke hängt von dem vorgegeben Dimmwert (Dimmpegel) ab, es liegt also vorzugsweise durchgehend ein PM-Dimmen vor.

Aufgrund der Dimmimpuls-Folge erzeugt der Steuerschaltungsteil Schaltsignale für einen Schalter S1 und einen Schalter S2. Die Betriebsschaltung weist vorzugsweise eine Stromquellencharakteristik auf, es kann aber auch am Ausgang eine konstante Spannung geliefert werden.

Gemäß **Figur 1** wird mit dem Schließen des Schalter S1 (S2 bleibt zunächst geöffnet) ein Vorwärtsstromkreis geschlossen, der folgende Elemente umfasst: die Speisespannung UG, über Masse den Schalter S1, die erste Induktivität L1, die zweite Induktivität L2 und die LED. Die Widerstände R1 und R2 bilden einen sehr hochohmigen Spannungsteiler, dessen Wirkung für den Vorwärtsstromkreis vernachlässigbar ist. Dieser Spannungsteiler dient lediglich zur Erzeugung eines Istwert-Signales UFET der LED-Spannung, die dem Steuerschaltungsteil zur Auswertung zugeführt wird, wenn dies erforderlich ist.

Wenn der Schalter S1 wieder geöffnet wird, fließt ein von der sich abbauenden magnetischen Energie der beiden Induktivitäten L1 und L2 verursachter Freilaufstrom in der gleichen Richtung durch den Freilaufkreis, der folgende Elemente umfasst: die beiden Induktivitäten L1 und L2, die LED und die Freilaufdiode DF.

Ein zwischen Masse und dem Schalter S1 gelegener Stromsensor misst den Vorwärtsstrom und liefert an den Steuerschaltungsteil einen entsprechenden Istwert IV. Ein zwischen dem ersten Schalter S1 und der Freilaufdiode FD gelegener Stromsensor misst den Freilaufstrom und liefert an den Steuerschaltungsteil ein entsprechendes IstwertSignal IF.

Die Messung des Freilaufstroms IF ist nicht zwingend erforderlich, da diese Grösse auch indirekt, bspw. mittels der der Messung des Vorwärtsstroms IV und bekannten Kenngrössen der Induktivitäten ermittelt werden kann. Die indirekte Ermittlung hat den Vorteil, dass somit ein Messpin des Steuerschaltungsteils eingespart werden kann.

Im übrigen sind bei Messung des Freilaufstroms IF auch andere Messanordnungen möglich, insbesondere eine einzige Messanordnung für den Freilaufstrom IF und für den Vorwärtsstrom IV (im Gegensatz zu der oben erläuterten getrennten Ausführung). Bspw. kann alternativ zu den Messanordnungen IF, IV dazu eine (kombinierte) Strommessung IV', IF' wie in Figur 1 dargestellt verwendet werden, wobei diese Messanordnung auch bei den Ausgestaltungen gemäss den weiteren Figuren zur Anwendung kommen kann. Bei dieser kombinierten Messanordnung IV', IF' können beide Stromphasen direkt ermittelt werden, aber dennoch ein Messpin eingespart werden.

Der Steuerschaltungsteil legt aufgrund des ihm zugeführten Dimmbefehls einen oberen maximalen Ladezustandswert (also einen Stromwert, bei dem der Schalter S1 ausgeschaltet wird) und einen oberen maximalen Entladezustandswert (also einen Stromwert, bei dem der Schalter S1 wieder eingeschaltet wird) während der ON-Zeit eines PM-Impulses fest. Die beiden Zustandswerte entsprechen einem bestimmten maximalen Lade- bzw. Entladestrom und bilden Sollwerte. Durch Vergleich der Istwerte mit den Sollwerten veranlasst der Steuerschaltungsteil den Schalter S1 zu einem wiederholten Umschalten mit der Folge, dass dadurch ein Zickzack-förmiger Impuls durch die LED geschickt wird. Der Steuerschaltungsteil arbeitet hier also wie ein Zweipunktregler. Der untere Wert des Entladestroms kann dabei auch Null sein. Alternativ dazu kann der Einschaltzeitpunkt von einer vorbestimmten Ausschaltzeit abhängig sein. Diese Ausschaltzeit kann vom Dimmbefehl abhängig sein.

Die Steilheit der Lade- und Entladezyklen hängt von dem Gesamt-Induktivitätswert der beiden Induktivitäten ab. Dieser kann durch Schließen des Schalters S2 erniedrigt werden, mit der Folge dass sich die Zahl der Umschaltungen des Schalters S1 pro Zeiteinheit erhöht, was einer Erhöhung der Taktfrequenz entspricht. Gleichzeitig werden dadurch die Anstiegsflanke am Anfang und die Endflanke am Ende des Impulses steiler.

Mit einem entsprechenden Dimmbefehl kann demnach nicht nur die Länge eines Impulses festgelegt werden, sondern es kann auch seine Form beeinflusst werden.

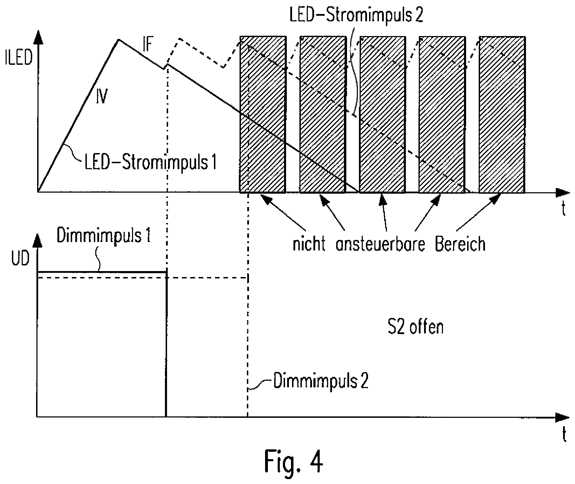

Anhand von **Figur 4** soll nunmehr dargestellt werden, wie sich zwei Dimmimpulse 1 und 2 (Darstellung unten), die eine unterschiedliche Pulsweite haben, in der Betriebsschaltung nach **Figur 1** auf die Erzeugung entsprechender Impulse (Darstellung oben) auswirken. Hierbei soll der Einfluss des Schalters S2 noch unberücksichtigt bleiben, d.h. er soll die ganze Zeit offen bleiben.

Man erkennt in **Figur 4****,** dass der kürzere bzw. weniger weite Dimmimpuls 1 zunächst einen ansteigenden LED-Impuls initiiert, der nach Erreichen des maximalen Ladezustandes der beiden Induktivitäten L1 +L2 durch Öffnen den Schalters S1 unterbrochen wird. Es schließt sich eine Entladephase mit einem abfallenden Stromabschnitt an, der ebenfalls durch die LED fließt. Wenn der maximale Entladezustand erreicht ist, wird der Schalter S1 wieder geschlossen, mit der Folge, dass der durch die LED fließende Strom wieder ansteigt. Der Dimmimpuls 1 endet jedoch kurz nach dem Wiederanstieg des LED-Impulses. Hierauf kann unmittelbar reagiert werden, indem der Schalter S1 sofort wieder geöffnet wird. Nun kann der Entladestrom bis zum endgültigen Abfall fließen.

Der durch den längeren bzw. weiteren Impuls 2 verursachte LED-Impuls 2 ist in **Figur 4** in gestrichelten Linien dargestellt. Er beginnt wie der LED-Impuls 1, läuft aber weiter als dieser. Im Gegensatz zum Dimmimpuls 1 endet der Dimmimpuls 2 in einem abfallenden Stromabschnitt des LED-Impulses 2. Die abfallenden Stromabschnitte sind durch eine Querschraffur markiert. Innerhalb dieser Abschnitte ist eine Ansteuerung nicht möglich. Das bedeutet, dass diese Freilaufphase einen gewissen Totbereich darstellt, in dem kleine Zwischenschritte nicht möglich sind. Die Freilaufphase muss in jedem Fall erst einmal voll durchlaufen werden und kann dann erst - indem man sie weiterlaufen lässt - die Abschlussflanke des LED-Impulses bilden.

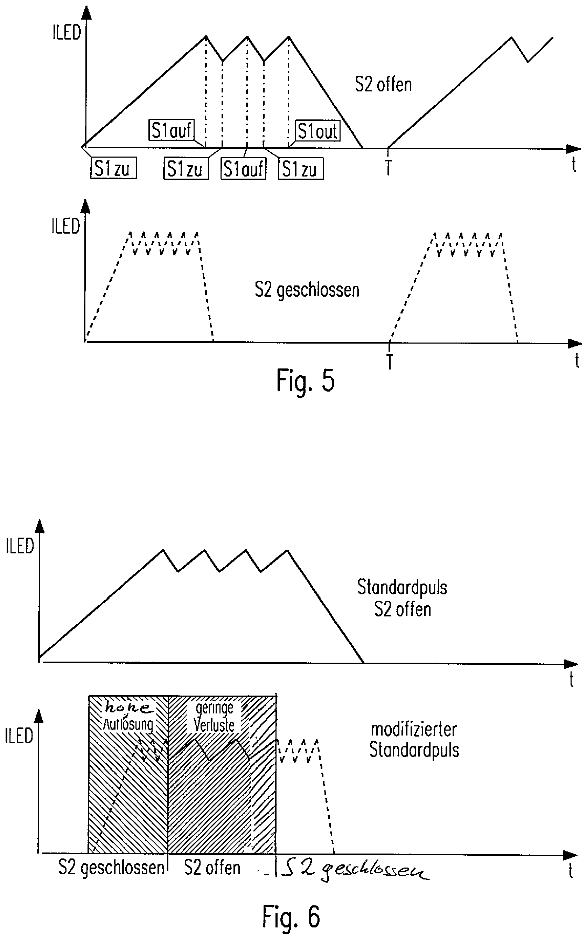

In **Figur 5** ist nunmehr die Wirkung des Schalters S2 demonstriert. In der oberen Darstellung sind zwei LED-Impulse dargestellt, die mit der Betriebsschaltung nach **Figur 1** erzeugt werden, wenn der Schalter S2 offen ist. In der unteren Darstellung sind dagegen zwei Impulse in Folge dargestellt, die erzeugt werden, wenn der Schalter S2 geschlossen ist. Man erkennt, dass die LED-Impulse in der unteren Darstellung insgesamt kürzer (weniger weit) sind als die LED-Impulse in der oberen Darstellung. Die Folgefrequenz der LED-Impulse ist jedoch in beiden Fällen die gleiche. Man erkennt ferner, dass Anstiegs- und Abfallflanken der LED-Impulse in der unteren Darstellung wesentlich steiler als die in der oberen Darstellung sind. Das bedeutet, dass die LED-Impulse in der unteren Darstellung Lichtimpulse mit einer höheren Auflösung zur Folge haben als die LED-Impulse in der oberen Darstellung.

Die Änderung der Taktfrequenz des Schalters S1, die durch Umschalten des Schalters 2 veranlasst wird, kann von bestimmten Betriebsparmetern abhängig gemacht werden, beispielsweise von dem für die LED vorgegebenen Dimmpegel. Letzterer findet seinen Niederschlag in der Impulsweite der Dimmimpulse, von denen in **Figur 4** zwei gezeigt sind. Eine Folge weiter (zeitlich längerer) Dimmimpulse veranlasst die LED zur Erzeugung einer hohen Grundhelligkeit. Diese Information wertet die Betriebsschaltung nach **Figur 1** dahingehend aus, dass sie den Schalter S2 offen hält, mit der Folge, dass die Taktfrequenz des Schalters S1 bei der Erzeugung der LED-Impulse relativ niedrig ist. Dadurch ist die Auflösung von Helligkeitsänderungen gemindert, aber auch die Umschaltverluste werden in einem vertretbaren Rahmen gehalten.

Wenn die Impulsweite der Folge von Dimmimpulsen dagegen geringer (zeitlich kürzer) ist, so bedeutet das, dass die von der LED erzeugte Grundhelligkeit gering ist. In diesem Fall ist das menschliche Auge gegenüber Helligkeitssprüngen sehr empfindlich. Die Betriebschaltung wertet die Impulsweite der Dimmimpulsfolge deshalb dahingehend aus, dass sie den Schalter S2 schliesst, wenn ein bestimmter Dimmpegel unterschritten wird. Dadurch wird die Taktfrequenz des Schalters S1 erhöht, mit der Folge, dass die Auflösung der LED-Impulse verbessert wird. Allerdings muss man dafür höhere Umschaltverluste in Kauf nehmen.

Eine weitere Möglichkeit der Modifizierung von LED-Impulsen ist in **Figur 6** gezeigt. Hier wird ein relativ weiter (zeitlich langer) LED-Impuls in der unteren Darstellung gegenüber dem oben dargestellten Standardimpuls an seinem vorderen und hinteren Ende mit einer höheren Taktfrequenz erzeugt als in seinem mittleren Bereich. Dadurch werden einerseits die für eine gute Auflösung notwendigen steilen Anstiegs-und Abfallflanken erzeugt, andererseits werden aber die Umschaltverluste insgesamt gering gehalten.

Die Betriebsschaltung nach **Figur 2** unterscheidet sich von derjenigen nach **Figur 1** nur dadurch, dass statt zwei Induktivitäten nur eine einzige Induktivität L1 mit einer Anzapfung vorgesehen ist. Hier kann der links der Anzapfung liegende Teil der Induktivität L1 durch den Schalter S2 kurz geschlossen werden.

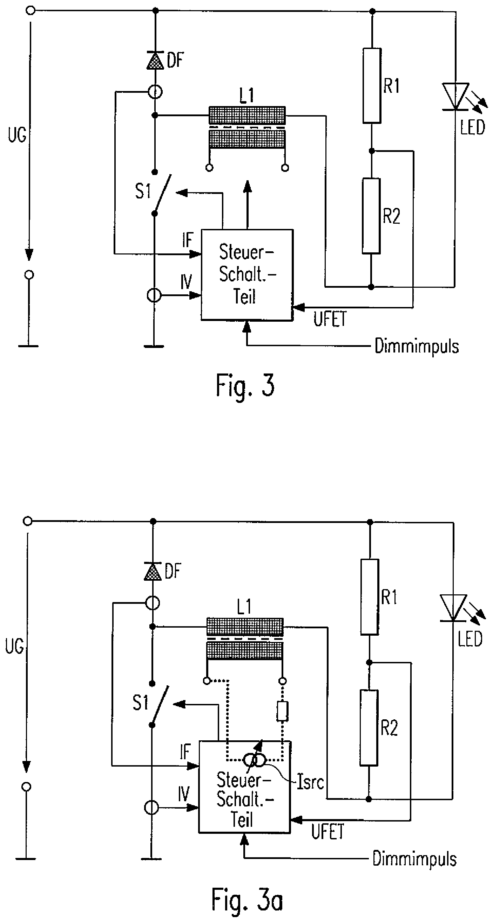

Die Betriebsschaltung nach **Figur 3** unterscheidet sich von derjenigen nach **Figur 1** ebenfalls dadurch, dass nur eine Induktivität L1 vorgesehen ist. Deren Wicklung ist magnetisch mit einer Steuerwicklung gekoppelt, über welche die Vormagnetisierung der Induktivität L1 und damit deren Induktivitätswert stetig veränderbar ist. Die entsprechenden Vormagnetisierungssignale werden der Steuerwicklung von dem Steuerschaltungsteil zugeführt. Beispielsweise kann die Induktivität L1 über die Steuerwicklung mit einer Strom- oder Spannungsquelle unterschiedlich vormagnetisiert werden. In Figur 3a ist beispielhaft eine Stromquelle Isrc zur Vormagnetisierung der Induktivität L1 über eine Steuerwicklung dargestellt.

## Patentansprüche

1. Verfahren zum Betreiben einer LED-Strecke mit pulsmodulierten Impulsen,
wobei während der Einschaltzeitdauer eines PM-Impulses durch Schliessen eines Schalters (S1) ein Energiespeicher (L1, L2) geladen und bei geöffnetem Schalter der Energiespeicher über die LED-Strecke entladen wird, so dass sich ein zyklisch ansteigender und abfallender Stromverlauf durch die LED-Strecke ergibt,
wobei der Schalter (S1) eingeschaltet wird, wenn eine untere Einschaltschwelle des LED-Stroms oder eine bestimmte Ausschaltzeit erreicht ist,
**wobei**
- die Zeitkonstante, also die Zeitdauer der ansteigenden und/oder der abfallenden Phase des Stromverlaufs durch die LED-Strecke zustandsabhängig kontinuierlich oder diskret verändert wird, **dadurch gekennzeichnet, dass**
- die Zeitkonstanten des Energiespeichers verändert werden,
wobei der Energiespeicher wenigstens eine Induktivität (L1, L2) aufweist, und
die Taktfrequenz des Schalters (S1) durch entsprechende Variierung des Induktivitätswertes der Induktivität (L1, L2) verändert wird.

2. Verfahren nach Anspruch 1,
**dadurch gekennzeichnet,**
**dass** eine Taktfrequenz in Abhängigkeit von einem jeweiligen Dimmpegel verändert wird.

3. Verfahren nach einem der vorhergehenden Ansprüche,
**dadurch gekennzeichnet,**
**dass** die Taktfrequenz am Anfang und/oder am Ende eines PM-Impulses gegenüber einem mittleren Bereich erhöht wird.

4. Verfahren nach einem der vorhergehenden Ansprüche,
**dadurch gekennzeichnet,**
**dass** die Taktfrequenz in Abhängigkeit von einer direkt oder indirekt erfassten LED-Spannung verändert wird.

5. Verfahren nach Anspruch 1,
**dadurch gekennzeichnet,**
**dass** die Induktivität (L1, L2) von zwei in Serie geschalteten Teilinduktivitäten gebildet oder mit einer Anzapfung versehen ist, und
**dass** eine Teilinduktivität oder ein Induktivitätsabschnitt zwischen der Anzapfung und einem Ende der Induktivität zwecks Erhöhung der Taktfrequenz kurzgeschlossen wird.

6. Betriebsschaltung zum Betreiben einer LED-Strecke mit pulsmodulierten Impulsen, umfassend eine Steuerschaltung, wobei während der Einschaltzeitdauer eines PM-Impulses die Steuerschaltung durch Schliessen eines Schalters (S1) einen Energiespeicher (L1, L2) lädt, wobei der LED-Strom ansteigt, und durch Öffnen des Schalters den Energiespeicher über die LED-Strecke entlädt, so dass sich ein zyklisch ansteigender und abfallender Stromverlauf durch die LED-Strecke ergibt,
**wobei** die Steuerschaltung dazu ausgelegt ist,
- die Zeitkonstante, also die Zeitdauer der ansteigenden und/oder der abfallenden Phase des LED-Verlaufs durch die LED-Strecke, zustandsabhängig kontinuierlich oder diskret zu verändern, **dadurch gekennzeichnet, dass** der Energiespeicher wenigstens eine Induktivität (L1, L2) aufweist, und dass die Steuerschaltung dazu ausgelegt ist, die Zeitkonstanten des Energiespeichers zu verändern, und die Taktfrequenz des Schalters (S1) durch entsprechende Variierung des Induktivitätswertes der Induktivität (L1, L2) zu verändern.

7. Schaltung nach Anspruch 6,
**dadurch gekennzeichnet,**
**dass** die die Steuerschaltung dazu ausgelegt ist, eine Taktfrequenz in Abhängigkeit von einem jeweiligen Dimmpegel zu verändern.

8. Schaltung nach einem der Ansprüche 6 bis 7,
**dadurch gekennzeichnet,**
**dass** die Taktfrequenz am Anfang und/oder am Ende eines PM-Impulses gegenüber einem mittleren Bereich erhöht wird.

9. Schaltung nach einem der Ansprüche 6 bis 8,
**dadurch gekennzeichnet,**
**dass** die Taktfrequenz in Abhängigkeit von einer direkt oder indirekt erfassten LED-Spannung verändert wird.

10. Schaltung nach einem der Ansprüche 6 bis 9,
**dadurch gekennzeichnet,**
**dass** die Induktivität (L1, L2) von zwei in Serie geschalteten Teilinduktivitäten gebildet oder mit einer Anzapfung versehen ist, und
**dass** eine Teilinduktivität oder ein Induktivitätsabschnitt zwischen der Anzapfung und einem Ende der Induktivität zwecks Erhöhung der Taktfrequenz kurzgeschlossen wird.

## Claims

1. A method for operating an LED series with pulse-modulated pulses,
wherein during the switch-on time period of a PM-pulse an energy store (L1, L2) is charged by closing a switch (S1) and when the switch is opened the energy store is discharged via the LED series, so that a cyclically increasing and decreasing current flow through the LED series results,
wherein the switch (S1) is switched on, if a lower switch-on threshold of the LED current or a specific switch-off time is achieved,
**wherein**
- the time constant, therefore the time period of the increasing and/or the decreasing phase of the current flow through the LED series is continuously or discretely changed depending on the state, **characterized in that**
- the time constants of the energy store are changed,
wherein the energy store has at least one inductor (L1, L2), and
the clock frequency of the switch (S1) is changed by a corresponding variation of the inductance value of the inductor (L1, L2).

2. The method according to Claim 1,
**characterized in**
**that** a clock frequency is changed depending on a respective dimming level.

3. The method according to any one of the preceding claims,
**characterized in**
**that** the clock frequency is increased at the beginning and/or at the end of a PM-pulse in relation to a central region.

4. The method according to any one of the preceding claims,
**characterized in**
**that** the clock frequency is changed depending on a directly or indirectly detected LED voltage.

5. The method according to Claim 1,
**characterized in**
**that** the inductor (L1, L2) is formed from two partial inductors connected in series or is provided with a tap, and
**that** a partial inductor or an inductor section is short-circuited between the tap and an end of the inductor for the purpose of increasing the clock frequency.

6. An operating circuit for operating an LED series with pulse-modulated pulses, comprising a control circuit, wherein during the switch-on time period of an PM-pulse the control circuit charges an energy store (L1, L2) by closing a switch (S1), wherein the LED current increases, and discharges the energy store via the LED series by opening the switch, so that a cyclically increasing and decreasing current flow through the LED series results,
**wherein** the control circuit is designed
- to continuously or discretely change the time constant, therefore the time period of the increasing and/or the decreasing phase of the LED flow through the LED series depending on the state, **characterized in that** the energy store has at least one inductor (L1, L2), and that the control circuit is designed to change the time constants of the energy store, and to change the clock frequency of the switch (S1) by a corresponding variation of the inductance value of the inductor (L1, L2).

7. A circuit according to Claim 6,
**characterized in**
**that** the control circuit is designed to change a clock frequency depending on a respective dimming level.

8. The circuit according to any one of Claims 6 to 7,
**characterized in**
**that** the clock frequency is increased at the beginning and/or at the end of a PM pulse in relation to a central region.

9. The circuit according to any one of Claims 6 to 8,
**characterized in**
**that** the clock frequency is changed depending on a directly or indirectly detected LED voltage.

10. The circuit according to any one of the Claims 6 to 9,
**characterized in**
**that** the inductor (L1, L2) is formed by two partial inductors connected in series or is provided with a tap, and
**that** a partial inductor or an inductor section is short-circuited between the tap and an end of the inductor for the purpose of increasing the clock frequency.

## Revendications

1. Procédé de commande d'une chaîne de LED avec des impulsions modulées,
dans lequel, pendant la durée d'activation d'une impulsion modulée, par fermeture d'un commutateur (S1), un accumulateur d'énergie (L1, L2) est chargé et, lorsque le commutateur est ouvert, l'accumulateur d'énergie est déchargé par l'intermédiaire de la chaîne de LED, de façon à ce qu'il en résulte un tracé du courant à travers la chaîne de LED ascendant ou descendant de manière cyclique,
dans lequel le commutateur (S1) est activé lorsqu'un seuil d'activation inférieur du courant de LED ou un temps de désactivation déterminé est atteint,
dans lequel
- la constante de temps, donc la durée de la phase ascendante et/ou descendante du tracé du courant à travers la chaîne de LED est modifiée de manière continue ou discrète en fonction de l'état, **caractérisé en ce que**
- les constantes de temps de l'accumulateur d'énergie sont modifiées,
dans lequel l'accumulateur d'énergie comprend au moins une inductance (L1, L2) et
la fréquence de cadencement du commutateur (S1) est modifiée par une variation correspondante de la valeur de l'inductance (L1, L2).

2. Procédé selon la revendication 1
**caractérisé en ce que**
une fréquence de cadencement est modifiée en fonction d'un niveau de gradation respectif.

3. Procédé selon l'une des revendications précédentes,
**caractérisé en ce que**
la fréquence de cadencement est augmentée au début et/ou à la in d'une impulsion modulée par rapport à une plage moyenne.

4. Procédé selon l'une des revendications précédentes,
**caractérisé en ce que**
la fréquence de cadencement est modifiée en fonction d'une tension de LED mesurée directement ou indirectement.

5. Procédé selon la revendication 1
**caractérisé en ce que**
l'inductance (L1, L2) est constituée de deux inductances partielles branchées en série ou est munie d'une prise et
une inductance partielle ou une portion d'inductance entre la prise et une extrémité de l'inductance est court-circuitée afin d'augmenter la fréquence de cadencement.

6. Circuit de commande pour la commande d'une chaîne de LED avec des impulsions modulées, comprenant un circuit de contrôle, dans lequel, pendant la durée d'activation d'une impulsion modulée, le circuit de contrôle charge, par la fermeture d'un commutateur (S1), un accumulateur d'énergie (L1, L2), dans lequel le courant de LED augmente, et décharge, par l'ouverture du commutateur, l'accumulateur d'énergie par l'intermédiaire de la chaîne de LED, de façon à ce qu'il en résulte un tracé de courant à travers la chaîne de LED ascendant et descendant de manière cyclique,
dans lequel le circuit de contrôle est conçu
- pour modifier de manière continue ou discrète la constante de temps, donc la durée de la phase ascendante et/ou descendante du tracé du courant de LED à travers la chaîne de LED, en fonction de l'état, **caractérisé en ce que** l'accumulateur d'énergie comprend au moins une inductance (L1, L2) et **en ce que** le circuit de contrôle est conçu pour modifier les constantes de temps de l'accumulateur d'énergie et pour modifier la fréquence de cadencement du commutateur (S1) par une variation correspondante de la valeur de l'inductance (L1, L2).

7. Circuit selon la revendication 6,
**caractérisé en ce que**
le circuit de contrôle est conçu pour modifier une fréquence de cadencement en fonction d'un niveau de gradation respectif.

8. Circuit selon l'une des revendications 6 à 7,
**caractérisé en ce que**
la fréquence de cadencement est augmentée au début et/ou à la fin d'une impulsion modulée par rapport à une plage moyenne.

9. Circuit selon l'une des revendications 6 à 8,
**caractérisé en ce que**
la fréquence de cadencement est modifiée en fonction d'une tension de LED mesurée directement ou indirectement.

10. Circuit selon l'une des revendications 6 à 9,
**caractérisé en ce que** l'inductance (L1, L2) est constitué de deux inductances partielles branchées en série ou est muni d'une prise et
une inductance partielle ou une portion d'inductance entre la prise et une extrémité de l'inductance est court-circuitée afin d'augmenter la fréquence de cadencement.
